# EUROPÄISCHE PATENTSCHRIFT

(11) **EP 1 179 998 B1**
(45) Veröffentlichungstag und Bekanntmachung des Hinweises auf die Patenterteilung: **06.10.2004**
(21) Anmeldenummer: 00926528.1
(22) Anmeldetag: 19.05.2000
(51) Int. Cl.: A61C 17/06, B01D 21/00, B01D 29/58

(54) **ABSCHEIDER ZUR ABTRENNUNG VON FESTSTOFFEN AUS EINEM AN EINEM ZAHNÄRZTLICHEN BEHANDLUNGSPLATZ ANFALLENDEN FLÜSSIGKEITS-FESTSTOFFGEMISCH**
SEPARATOR FOR SEPARATING SOLID MATTER FROM A LIQUID-SOLID MIXTURE, COLLECTED AT A DENTAL TREATMENT CENTRE
SEPARATEUR POUR SEPARER DES MATIERES SOLIDES PRESENTES DANS UN MELANGE MATIERES SOLIDES/ LIQUIDES PRODUIT DANS UN ESPACE DE SOINS DENTAIRES

(30) Priorität: 20.05.1999 US 315330; 30.09.1999 US 408680
(43) Veröffentlichungstag der Anmeldung: 20.02.2002
(73) Patentinhaber: Pregenzer, Bruno, 6414 Mieming (AT); Konzett, Alfred, 6082 Patsch (AT); Forster, Michael, 6112 Wattens (AT)
(72) Erfinder: Pregenzer, Bruno, 6414 Mieming (AT); Konzett, Alfred, 6082 Patsch (AT); Forster, Michael, 6112 Wattens (AT)
(74) Vertreter: Torggler, Paul Norbert, Dr.
(86) Internationale Anmeldenummer: PCT/AT2000/000140
(87) Internationale Veröffentlichungsnummer: WO 2000/071050

(56) Entgegenhaltungen:
- WO-A-98/46324
- AT-B- 401 228
- DE-A- 3 417 248
- US-A- 3 777 403
- US-A- 4 591 437

## Beschreibung

Die Erfindung betrifft einen Abscheider zur Abtrennung von Feststoffen aus einem an einem zahnärztlichen Behandlungsplatz anfallenden Flüssigkeits-Feststoffgemisch, mit einem einen Gemischeinlaß und einen Flüssigkeitsauslaß aufweisenden Gehäuse, in dem ein Feststoffabscheideraum vorgesehen ist, der eine erste, untere Sedimentationszone, die mit einem Gemischeinlaß strömungsverbunden ist, und zumindest eine oberhalb der ersten Sedimentationszone angeordnete zweite Sedimentationszone aufweist, an deren Durchströmungsende der Flüssigkeitsauslaß vorgesehen ist. Die Feststoffe enthalten Bohrstaub, Knochensplitter, quecksilberhältige Amalgampartikel, gegebenenfalls auch Partikel von Dentalmetallen, wie Zahngold, usw., wobei vor allem das Quecksilber aus Gründen des Umweltschutzes nichts ins Abwasser gelangen soll.

Seit etwa 20 Jahren wird daher zumindest ein wesentlicher Anteil der Feststoffe aus dem Gemisch abgetrennt, wofür drei prinzipiell verschiedene Möglichkeiten offenstehen, nämlich die Ablagerung schwerer Teilchen durch den Einfluß der Schwerkraft, die Ablagerung mit aktiver Unterstützung durch zentrifugale Kräfte in Zentrifugaltrommeln od.dgl., sowie der Rückhalt von Teilchen über einer gewissen Größe durch Filter, Siebe od.dgl.

Jede der drei Möglichkeiten besitzt Nachteile: So führt eine Rückhaltung von Feststoffen durch in die Strömung eingesetzte Filter und Siebe zu einer verhältnismäßig raschen Verstopfung der Poren und Maschen, die Ablagerung durch Schwerkraft erfordert eine möglichst ungestörte, langsame Durchströmung des Feststoffabscheideraumes, die während der zahnärztlichen Tätigkeit nur schwer erreicht werden kann, da stark schwankende Mengen zufließen, und die Abscheidung mittels Zentrifugen erfordert wesentlich aufwendigere Geräte mit Antriebsmotor, Steuerung, usw.

Ein Abscheider der eingangs genannten Art ist beispielsweise aus der US 4591437 A bekannt. Dieser weist im Anschluß an die zweite Sedimentationszone ein nach oben gerichtetes Abflußrohr auf, sodaß ein Abfluß des Abwassers nur am oberen Ende des nach oben führenden Abflußrohres möglich ist.

Aus der US 3777403 A ist ein in die Saugleitung einer Absauganlage einsetzbarer Feststoffabscheider bekannt, der einen einfachen Sedimentationsbehälter und einen mit den Zu- und Ablaufanschlüssen versehenen Deckel aufweist. Auch hier ist das Absaugrohr nach oben gerichtet.

Die AT 401 228 B zeigt einen ebenfalls in die Saugleitung einer zahnärztlichen Absauganlage einsetzbaren Feststoffabscheider, bei dem die Saugluft und die feststofffreie Flüssigkeit durch eine dem gemeinsamen Auslaß zugeordnete Quecksilberabscheidevorrichtung abgeführt werden.

Eine Aufgabe der Erfindung ist die Verbesserung der Abtrennung von Feststoffen mittels Schwerkraft aus einem dentalen Flüssigkeits-Feststoffgemisch in einem kompakten Abscheider, wobei beispielsweise Durchflußmengen von 6 bis 8 I/Minute verarbeitbar sein sollen.

Diese Aufgabe wird mit einem Abscheider der eingangs genannten Art dadurch gelöst, daß als Flüssigkeitsauslaß ein freier Überlauf in ein Rohr ausgebildet ist, das durch den Feststoffabscheideraum nach unten geführt ist. Aufgrund des obenliegenden Flüssigkeitsüberlaufes ist zumindest ein wesentlicher Teil des Feststoffabscheideraums geflutet, sodaß die Anordnung zumindest zweier Sedimentationszonen übereinander ausreichend große Sedimentationsbereiche auf kleinem Raum sicherstellt, in denen auch bei stark schwankenden Durchflußmengen gute Sedimentationsbedingungen gegeben sind.

In einer ersten bevorzugten Ausführung ist vorgesehen, daß im Feststoffabscheideraum zumindest zwei koaxial übereinander angeordnete Sedimentationsschalen vorgesehen sind, die jeweils einen Sedimentationsbereich der zweiten Sedimentationszone bilden. Die Sedimentationsschalen sind insbesondere mit nicht fluchtenden Bodenöffnungen und diese umgebenden, nach oben hochstehenden Hohlzylindern versehen, die jeweils eine Sedimentationshöhe vorgeben. Die versetzten Bodenöffnungen bewirken jeweils eine seitliche Umlenkung der Strömung zwischen den Sedimentationsschalen, die den Aufwärtsströmweg verlängert.

In einer zweiten bevorzugten Ausführung ist vorgesehen, daß die zweite, obere Sedimentationszone zumindest zwei durch Überlaufstege voneinander getrennte, jeweils einen Sedimentationsbereich bildende Kammern aufweist, in deren letzter der als freier Überlauf in das Rohr ausgebildete Flüssigkeitsauslaß vorgesehen ist.

Die durch Überlaufstege getrennten Kammern sind insbesondere in einem in den Sedimentationsbehälter einsetzbaren Einsatzelement ausgebildet, das zwei einander diametral gegenüberliegende Bodenöffnungen aufweist, wobei die erste Bodenöffnung eine Strömungsverbindung aus der darunterliegenden ersten Sedimentationszone herstellt, und die zweite Bodenöffnung das Rohr aufnimmt.

In dieser Ausführung ist der Feststoffabscheideraum insbesondere mit einem mit einer oberen Zuflußleitung und mit einem unteren Abwasserkanal strömungsverbindbaren Sedimentationsbehälter für die Feststoffe versehen, und vom Flüssigkeitsauslaß in der letzten Kammer ist das mit dem Abwasserkanal verbindbare Rohr durch den Sedimentationsbehälter hindurch nach unten geführt. Auch hier ist zumindest ein beträchtlicher Teil des Feststoffabscheideraumes geflutet und eine vertikale Strömungsumkehr gegeben.

Der Flüssigkeitsabscheider kann weiters noch einen Vorabscheidebereich mit von oben nach unten kaskadenartig durchströmten Wannen umfassen, aus dem das Gemisch dann durch einen ringförmigen Einlaßraum außerhalb der zweiten oberen Sedimentationszone nach unten in die erste untere Sedimentionszone zufließt. Der eine geringe Breite aufweisende Einlaßraum trägt wesentlich zur Ruhe im Feststoffabscheideraum bei, da sich Turbulenzen aus dem Einlaßraum kaum ins Innere des Sedimentationsbehälters übertragen können.

Der ringförmige Einlaßraum ist in einer bevorzugten Ausführung durch eine Tauchwand nach unten verlängert, sodaß die Strömungsumkehr durch den unteren Rand der Tauchwand bedingt ist. Der untere Rand der Tauchwand verläuft dabei nicht horizontal, sondern weist einen tiefsten Bereich unterhalb des Gemischeinlasses auf. Der Verlauf des unteren Randes der Tauchwand ist vorzugsweise so gewählt, daß der Abstand zwischen dem Gemischeinlaß und dem Rand an jeder Stelle annähernd gleich groß ist. Zu Beginn des Abscheidebetriebes wird sich eine Strömung einstellen, in der vom Gemischeinlaß weg eine vertikale Abwärtskomponente vorherrscht, bis sich das sedimentierende Material diesen bevorzugten Strömungsweg selbst versperrt. Die Strömung verlagert sich dadurch und erhält zunehmend eine periphere Komponente entlang der Tauchwand. Dadurch wird nicht nur die Sedimentationshöhe auf ein Niveau angehoben, das wesentlich oberhalb des tiefsten Bereichs der Tauchwand liegt, sodaß ein sehr großes Fassungsvermögen des Sedimentationsbehälters erreicht wird, sondern auch die Sedimentationszeit nicht nur beibehalten, sondern sogar vergrößert.

In einer weiteren bevorzugten Ausführung wird auch transportierende Saugluft in einem im Gehäuse oberhalb des Sedimentationsbehälters ausgebildeten Luftabscheideraum vom Gemisch getrennt, in dem die Luft über Umlenkflächen geführt und durch einen Luftauslaß abgesaugt wird, der bevorzugt an einem im Gehäuse zentral nach unten geführten Rohr vorgesehen ist. In dieser Ausführung kann die von umweltbelastenden Stoffen praktisch freie Flüssigkeit nicht nur in den Abwasserkanal geleitet werden, sondern auch der Saugluft wieder zugegeben werden, wenn als Saugpumpe beispielsweise eine Wasserringpumpe verwendet wird, die Dichtflüssigkeit benötigt. Die gereinigte Flüssigkeit kann in diesem Fall in einer unterhalb des Sedimentationsbehälters angeordneten Auslaßkammer wieder in den Luftstrom eingesaugt und von diesem abgeführt werden.

Wenn die zweite Sedimentationszone in einem Einsatzelement vorgesehen ist, weist dieses auch eine zentrale Bodenöffnung auf, durch die das Rohr des Luftauslasses geführt ist.

Im ringförmigen Einlaßraum in die erste Sedimentationszone können, insbesondere, wenn ein Luftabscheideraum ausgebildet ist, in Einströmrichtung ansteigende Lamellen vorgesehen sein, deren radiale Ränder jeweils mit Abstand übereinander angeordnet sind. Der Eintrittsraum teilt sich dadurch in eine Reihe von Durchtrittsschlitzen zwischen den Lamellen auf, die eine Abbremsung des zufließenden Gemisches bewirken.

Um auch umweltschädliche Schwermetallionen, beispielsweise gelöste Quecksilberverbindungen aus der Flüssigkeit zu entfernen, kann vorgesehen sein, daß in der zweiten Sedimentationszone eine diese bindende Einlage oder Füllung, beispielsweise aus Aktivkohle, vorgesehen ist.

Nachstehend wird nun die Erfindung an Hand von Figuren der beiliegenden Zeichnungen näher beschrieben, ohne darauf beschränkt zu sein.

Es zeigen:
- Fig. 1: einen Längsschnitt durch eine erste Ausführung eines Abscheiders,
- Fig. 2: einen Längsschnitt durch eine zweite Ausführung eines Abscheiders,
- Fig. 3: einen Längsschnitt durch eine dritte Ausführung eines Abscheiders,
- Fig. 4: eine Schrägansicht einer Sedimentationsschale von oben,
- Fig. 5: die Schrägansicht einer Sedimentationsschale von unten.
- Fig. 6: einen Längsschnitt durch eine vierte Ausführung eines Abscheiders.
- Fig. 7: einen Längsschnitt durch eine fünfte Ausführung eines Abscheiders, gemäß der Linie V-V von Fig. 8,
- Fig. 8: eine Draufsicht auf ein Einsatzelement des Sedimentationsbehälters, und
- Fig. 9: einen Längsschnitt durch eine sechste Ausführung eines Abscheiders.

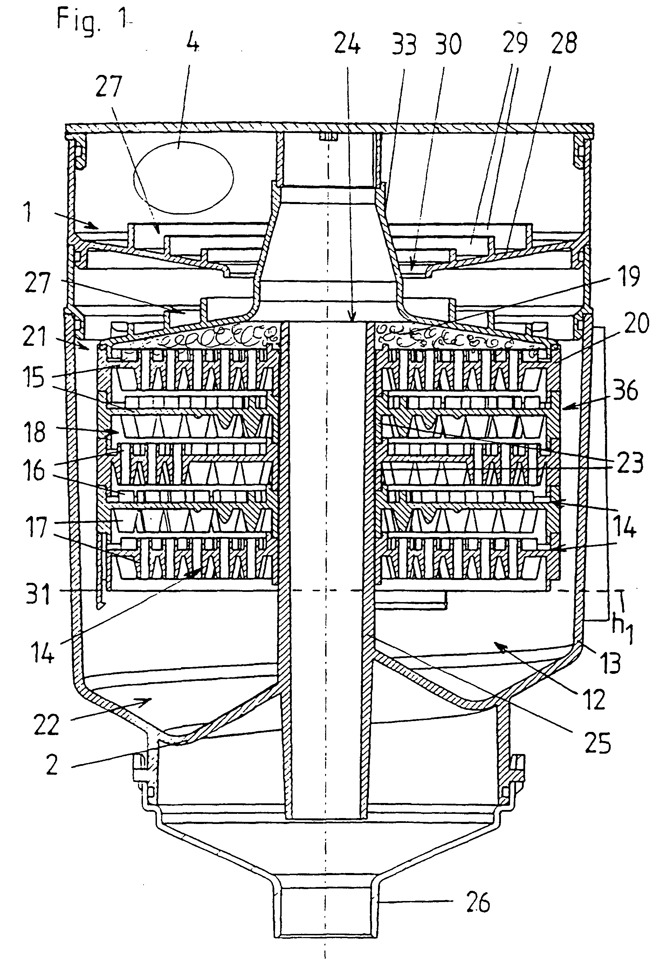

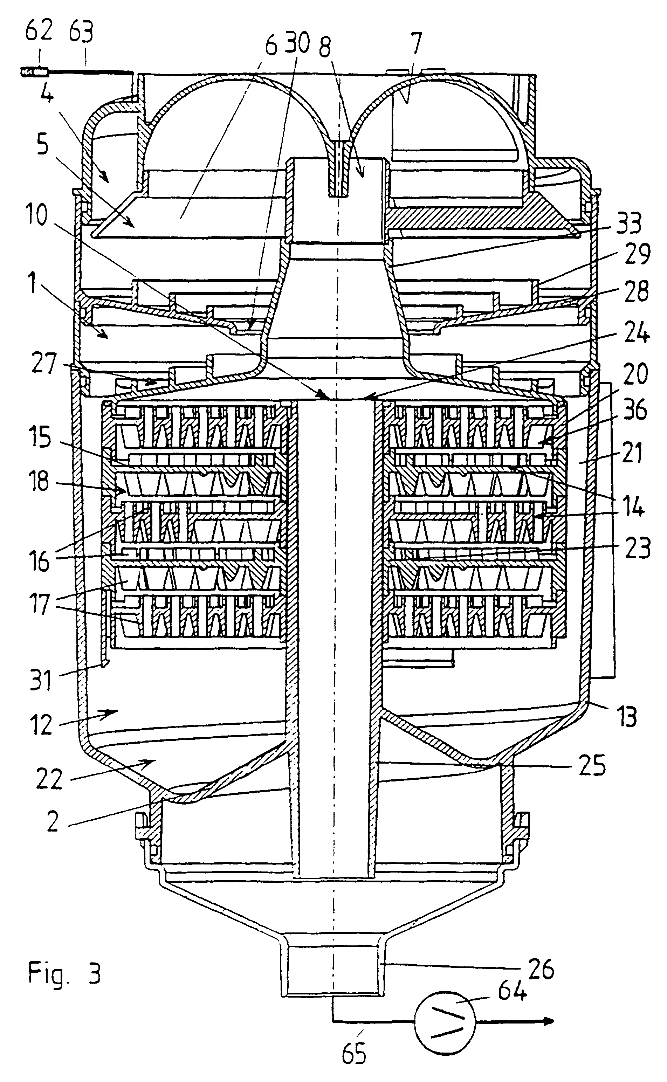

Fig. 1 zeigt einen Abscheider zum Abtrennen von Feststoffen aus einer Flüssigkeit, wobei das von einem Speichelsauger 62 (Fig. 3) aus dem Mund eines Patienten angesaugte Gemisch in einem vorangehenden Luftabscheider von der Saugluft getrennt und durch eine Druckschleuse. ein Ventil od.dgl. aus dem Unterdruckbereich einer zahnärztlichen Sauganlage ausgetragen worden ist. Der Abscheider steht somit unter normalem Luftdruck und das Gemisch tritt durch den Gemischeinlaß 4 in das Gehäuse 1 ein, in dessen Gemischeintrittsbereich eine zentrale Ringwand 33 vorgesehen ist, unterhalb der der Auslaß 24 für die von Feststoffen befreite Flüssigkeit an einem vertikalen Abflußrohr 25 vorgesehen ist. und den Flüssigkeitsauslaß 24 gegen den Gemischeintrittsbereich abschirmt.

Unterhalb des Gemischeintrittsbereiches umschließt das Gehäuse 1 einen Feststoffabscheideraum 12 mit einem Sedimentationsbehälter 13, in dem die Feststoffe in zwei Sedimentationszonen 22. 36 aus der Flüssigkeit getrennt werden. Oberhalb des Sedimentationsbehälters 13 ist ein Vorabscheidebereich für vor allem gröbere und schwerere Partikel vorgesehen. in dem von oben nach unten durchströmte Wannen 27 vorgesehen sind, die einen geneigten Boden 28 und insbesondere drei Ringstege 29 aufweisen, sodaß jeweils drei kaskadenartig aufeinanderfolgende konzentrische Ablagerungskammern ausgebildet sind.

Der Boden 28 der oberen der beiden Wannen 27 ist nach innen geneigt und weist eine zentrale Öffnung 30 auf, die den Durchlaß zur darunter angeordneten zweiten Wanne 27 freiläßt, und durch die die Ringwand 33 vom Zentralbereich der zweiten Wanne 27 hochsteht. Die zweite Wanne 27 weist einen nach außen geneigten Boden 28 auf, an dem ebenfalls drei Ringstege 29 vorgesehen sind, die weitere konzentrische. kaskadenartig aufeinanderfolgende Ablagerungskammem bilden. Flüssigkeit und Feststoffe fließen dann über den Außenrand der zweiten Wanne 27 nach unten in einen durch einen Ringraum 50 geringer Breite gebildeten Gemischzuführkanal 21 zur ersten, unteren Sedimentationszone 22, die im unteren Bereich des Sedimentationsbehälters 13 vorgesehen ist, wobei an der tiefsten Stelle des geneigten Gehäusebodens 2 eine nicht gezeigte, verschlossene Abflußöffnung vorgesehen sein kann. Der Gemischzufuhrkanal 21 ist außen durch die Gehäusewand und innen durch einander zu einem Rohr ergänzende, äußere Begrenzungswände 20 mehrerer, koaxial übereinander angeordneter Sedimentationsschalen 14 begrenzt, die eine zweite Sedimentationszone 36 bilden. Der Sedimentationsbehälter 13 ist während des Betriebes stets mit Flüssigkeit gefüllt, da der Flüssigkeitsauslaß 24 aus der zweiten Sedimentationszone 36 oberhalb der obersten Sedimentationsschale 14 als freier Überlauf am vertikalen Abflußrohr 25 vorgesehen ist, dessen oberes Ende in Fig. 1 über die oberste Sedimentationsschale 24 übersteht. Am unteren Ende des durch die Begrenzungswände 20 der Sedimentationsschalen 14 gebildeten Rohres wird die Strömung in der Flüssigkeit nach innen und nach oben umgelenkt, wobei hier vor allem noch feine und feinste Feststoffpartikel mitgeführt werden, die sich nun in den von unten nach oben durchströmten Sedimentationsschalen 14 ablagern.

Die Sedimentationsschalen 14 weisen jeweils einen Boden 15 auf, in dem eine Vielzahl von Öffnungen vorgesehen sind, die von nach oben hochstehenden Hohlzylindem 16 und von nach unten ragenden Hohlkegelstümpfen 17 umgeben sind. Die Oberseiten der Hohlzylinder 16 definieren die maximale Sedimentationshöhe in jeder Sedimentationsschale 14. Die äußere Begrenzungswand 20 jeder Sedimentationsschale 14 steht vom Boden 15 auch nach unten, sodaß zwischen den Oberseiten der Hohlzylinder 16 und der Unterseite des Bodens 15 der darüber angeordneten Sedimentationsschale 14 ein Freiraum 18 verbleibt, in den die Hohlkegelstümpfe 17 ragen. Die Sedimentationsschalen 14 weisen weiters eine zentrale Öffnung umgebende innere Begrenzungswände auf, durch die das Abflußrohr 25 für die Flüssigkeit nach unten fließt, dem ein unterer Gehäuseauslaß 26 zugeordnet ist. Die Hohlzylinder 16 und die Hohlkegelstümpfe 17 sind jeweils in radial sich erstreckenden Reihen angeordnet, wobei jeweils zwischen zwei mit größerem Abstand zur äußeren Begrenzungswand 20 endenden Reihen eine kurze Reihe eingefügt ist, die außen beginnt und etwa am halben Radius endet.

Um eine möglichst gute Ablagerung auch feinster Partikel in den Sedimentationsschalen 14 zu ermöglichen. sollen bzw. dürfen die Öffnungen in den Böden 15 der Sedimentationsschale 14 nicht fluchten, also keine durchgehende Strömungskanäle bestehen, sondern die aus den Hohlzylindern 16 austretende Flüssigkeit muß im Freiraum 18 in zumindest einen der benachbarten Hohlkegelstümpfe 17 seitlich umgelenkt werden.

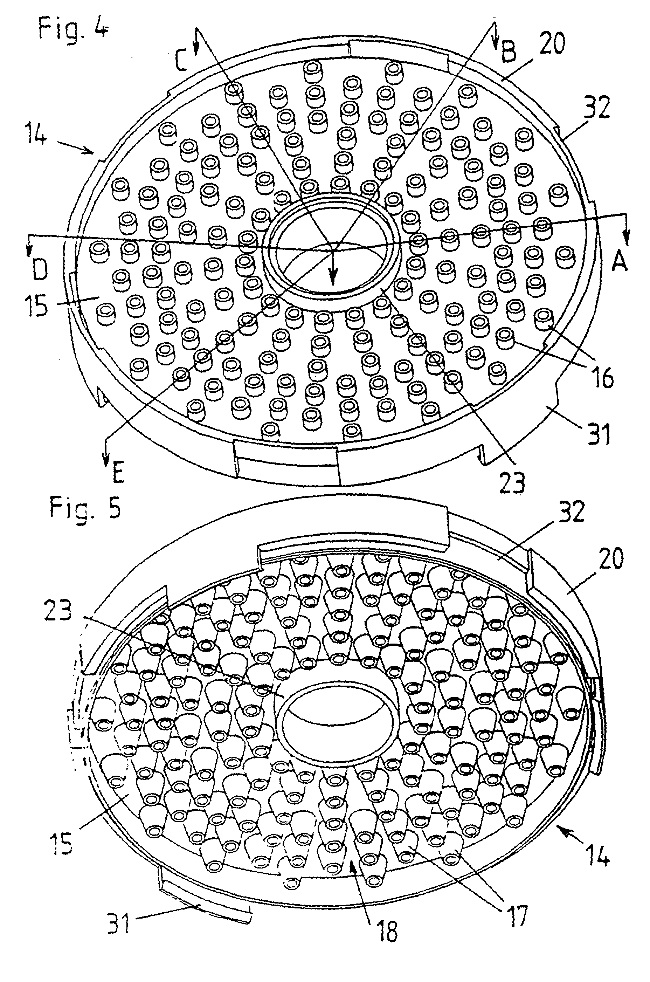

Wie aus den Fig. 4 und 5 ersichtlich ist, sind die äußeren Begrenzungswände 20 der Sedimentationsschalen 14 mit drei nach unten vorstehenden Raststegen 31 und entsprechenden Rastausnehmungen 32 versehen, sodaß sie übereinandergereiht und verrastet werden können. Die Ausnehmungen 32 sind dabei nicht mittig zwischen den Raststegen 31 vorgesehen, sodaß die Sedimentationsschalen 14 beim Übereinandersetzen nicht um 60°, sondern in Richtung des Pfeiles in Fig. 4 gesehen, um weniger als 60° zueinander verdreht sind.

In den in Fig. 4 und 5 gezeigten Ausführungen sind 18 Reihen mit je fünf Hohlzylindem 16 ausgebildet, die jeweils einen Winkel von 20° zueinander einschließen. Mittig zwischen zwei Reihen mit fünf Hohlzylindern 16 und Hohlkegelstümpfen 17 ist jeweils eine Reihe mit drei Hohlzylindem 16 und Hohlkegelstümpfen 17 eingefügt. Eine Verdrehung der obenliegenden Sedimentationsschalen 14 um 20°, 40°, 60° usw. läßt daher die Reihen zur Deckung bringen und die Öffnungen fluchten. Eine Verdrehung um 10°, 30°, 50° usw. legt eine Reihe mit fünf Hohlzylindem/Hohlkegelstümpfen und eine Reihe mit drei Hohlzylindern/Hohlkegelstümpfen übereinander, wobei die Hohlzylinder 16 der unteren Sedimentationsschale 14 zu den Hohlkegelstümpfen 17 der darüberliegenden Sedimentationsschale 14 nur in radialer Richtung versetzt sind.

In den Längsschnitten der Fig. 1 bis 3 stimmen hingegen die Anordnungen der Hohlzylinder/Hohlkegelstümpfe nur in jeder vierten Sedimentationsschale 14 überein, wie aus den Schnitten der untersten und der obersten (fünften) Sedimentationsschale 14 ersichtlich ist. Diese Anordnung ergibt sich, wenn der Winkel von 120° zwischen den beiden benachbarten Raststegen im Verhältnis von 55° und 65° aufgeteilt ist sodaß erst nach der vierten Sedimentationsschale 14 die Übereinstimmung erhalten wird, da erst dann der Winkel von 4 x 55° = 220° bzw. 4 x 65° = 260° ein ganzzahliges Vielfaches des Winkels von 20° zwischen zwei Reihen von Hohlzylindem/Hohlkegelstümpfen 16, 17 darstellt. (Alle Winkelangaben beziehen sich dabei jeweils auf die gedachten radialen Mittelebene der Raststege 31, Rastausnehmungen 32. Hohlzylinder 16 und Hohlkegelstümpfe 17).

Die Fig. 4 zeigt den Verlauf der Schnittlinien A, B, C, D und E der fünf zusammengebauten Sedimentationsschalen 14 nach Fig. 1 bis 3.

Die oberste Sedimentationsschale 14, also die letzte in Strömungsrichtung vor dem Flüssigkeitsauslaß 24, enthält bevorzugt eine Füllung 19, die gelöste Quecksilberionen und/oder feinst dispergiertes elementares oder dampfförmiges Quecksilber bindet. Dies können beispielsweise Metallfäden, ein Metallgewebe, ein Metallschaum usw. aus einem Quecksilber legierenden oder in bezug auf Quecksilber unedlerem Metall sein (Eisen, Zink, Zinn, Magnesium, Kupfer usw.). Für die Entfernung von Quecksilberionen kann eine ionentauschende Füllung vorgesehen sein, beispielsweise Thiol-, Thiohamstoff- od. dgl. lonentauschmaterialien. Die Füllung 19 kann weiters auch Aktivkohle beinhalten.

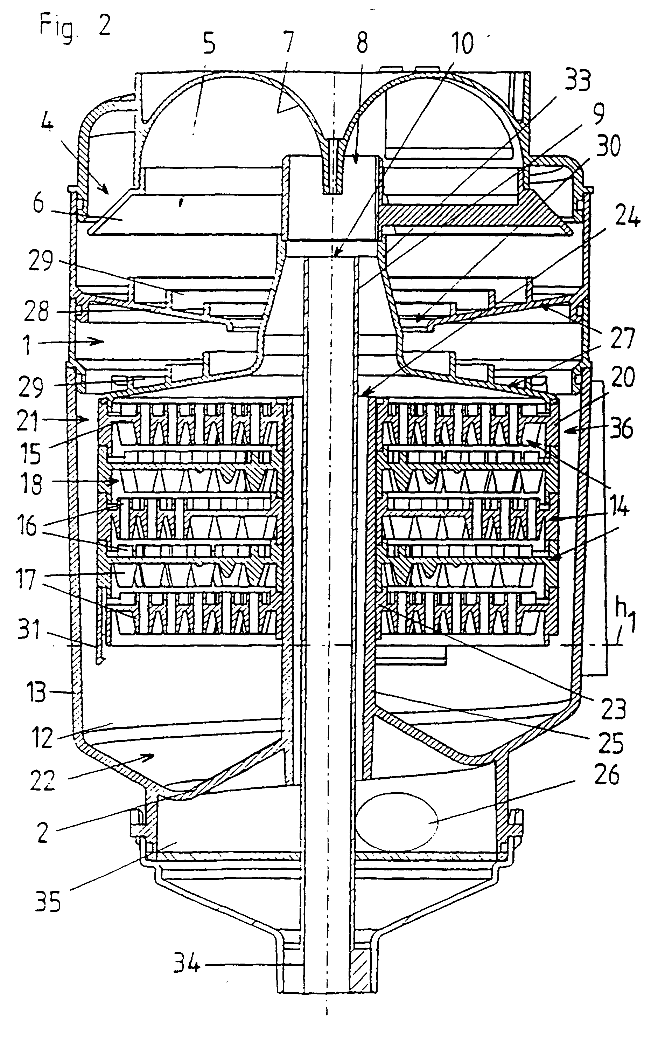

In den Ausführung nach Fig. 2 enthält das Gehäuse 1 zusätzlich einen Luftabscheideraum 5 oberhalb des Feststoffabscheideraumes 12, sodaß die das Gemisch über die Leitung 63 (Fig. 3) in das Abscheidergehäuse 1 transportierende Saugluft vor der Feststoffabtrennung im selben Gerät abgetrennt wird. Der Luftabscheideraum 5 enthält eine schürzenartige und eine kuppelartige, mittig tiefgezogene Umlenkfläche 6, 7, wobei der Gemischauslaß 4 ober- und außerhalb der schürzenartigen Umlenkfläche 6 vorgesehen ist. Die Saugluft wird zu einem Luftauslaß 10 gefördert, der an einem zentral im Flüssigkeitsabflußrohr 25 hochstehenden Luftabflußrohr 9 vorgesehen ist, dessen oberes Ende innerhalb der Ringwand 33 des Vorabscheidebereiches liegt, die in dieser Ausführung eine obere Öffnung 8 aufweist, in die der tiefgezogene Bereich der kuppelartigen Umlenkfläche 7 ragt. Das Luftabflußrohr 9 weist am unteren Ende einen Anschluß 34 für eine Leitung zur Saugpumpe auf. Der Feststoffabscheideraum 12 ist gleich wie in Fig. 1 beschrieben ausgebildet. Das Abflußrohr 25 mündet jedoch unterschiedlich in eine unterhalb des Gehäuses 1 angeordnete Auffangkammer 35; die mit dem unteren Gehäuseauslaß 26 für die gereinigte Flüssigkeit versehen ist.

In der Ausführung nach Fig. 3 ist ebenfalls ein Abscheider beschrieben, in dessen Gehäuse 1 gleich wie in Fig. 2 ein Luftabscheideraum 5 und ein Feststoffabscheideraum 12 vorgesehen sind. Konstruktiv unterschiedlich ist die Ausbildung des Auslaßbereiches für Luft und Flüssigkeit, da das obere Ende des Abflußrohres 25 den Luftauslaß 10 und den Flüssigkeitsauslaß 24 umfaßt. In dieser Ausführung wird die abgetrennt Luft mit der gereinigten Flüssigkeit wieder vereint, und an den dem Abflußrohr 25 zugeordneten Gehäuseauslaß 26 ist eine Leitung 65 zu einer als Wasserringpumpe ausgebildete und daher auch die Zufuhr von Flüssigkeit erfordernde Saugpumpe 64 angeschlossen.

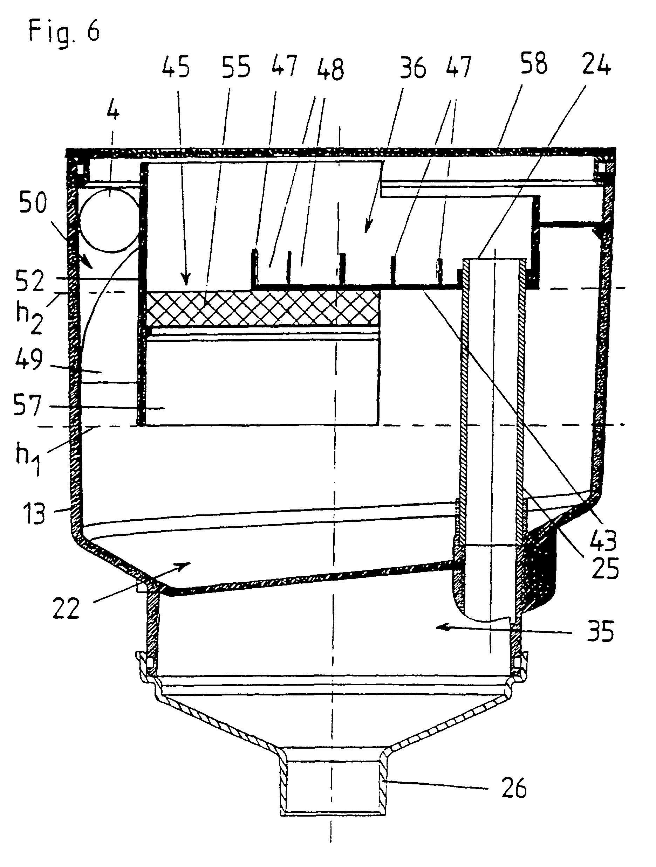

Fig. 6 zeigt eine zweite Ausführung ohne Luftabscheidung, in der das Gemisch wiederum durch den Gemischeinlaß 4 in den mit einem Deckel 58 versehenen Sedimentationsbehalter 13 eintritt, dessen Einlaßraum 50 durch einen Ringsteg 52 vom Mittelbereich abgeteilt ist. Unterhalb des Einlaßraumes 50 weist der Sedimentationsbehälter 13 die erste Sedimentationszone 22 auf, in der vor allem gröbere und schwerere Partikel sich sammeln und die vom Gemisch von oben nach unten durchströmt wird. Am unteren Ende einer in Verlängerung des Ringsteges 52 über einen Teil des Umfanges vorgesehenen Tauchwand 57 wird die Strömung in der Flüssigkeit nach innen und nach oben in die zweite Sedimentationszone 36 umgelenkt, wobei hier vor allem noch feine und feinste Feststoffpartikel mitgeführt werden. Sobald die Sedimentation das durch den unteren Rand der Tauchwand 57 vorgegebene Niveau h₁ erreicht hat, ist der beschriebene Strömungsweg gesperrt und die Strömung verlagert sich entlang der Tauchwand 57 peripher bis zu deren Ende, sodaß der Strömungsweg trotz ansteigender Sedimentationsoberfläche nicht verkürzt wird. Die maximale Sedimentationshöhe h₂ der ersten Sedimentationszone 22 ist durch die Unterkante des Ringsteges 52 definiert.

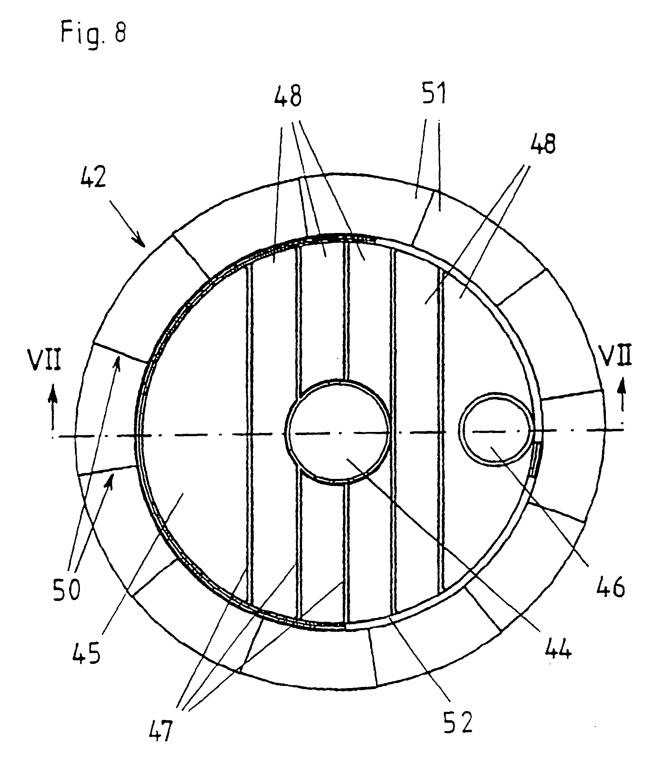

Die zweite Sedimentationszone 36 ist in einem Einsatzelement 42 vorgesehen, das in den Sedimentationsbehälter 13 eingesetzt ist, mit dem Ringsteg 52 versehen ist, und einen Boden 43 aufweist, von dem, wie vor allem aus Fig. 8 ersichtlich ist, zueinander parallele Übertaufstege 47 hochstehen, die Kammern 48 begrenzen. Der Boden 43 weist eine erste Öffnung 45 auf, die die Strömungsverbindung zur ersten Sedimentationszone 22 darstellt, und in der letzten Kammer 48 eine zweite Öffnung 46 auf, durch die ein Abflußrohr 25 durch den Sedimentationsbehälter 13 nach unten in eine Auslaßkammer 35 geführt ist. Der obere Rand des Rohres 25 bildet den Flüssigkeitsauslaß 24 des Sedimentationsbehälters 13 in Form eines freien Überlaufes, in den nach Passage der Kammern 48 der zweiten Sedimentationszone 36 praktisch feststofffreie Flüssigkeit übertritt. Die Auslaßkammer 35 ist mit einem Auslaß 26 versehen, der mit einer Abwasserleitung verbindbar ist.

Der Gemischauslaß 4 liegt in gleicher Höhe wie, bevorzugt geringfügig höher als die Oberkante des höchsten Überlaufsteges 47, sodaß der Sedimentationsbehälter 13 bis zu dieser Oberkante mit Flüssigkeit gefüllt ist. Beruhigungsflügel 49 sind zusätzlich vorgesehen, um zumindest im Einlaßraum 50 Turbulenzen möglichst zu verhindern, die die Sedimentation stören können.

Die erste Öffnung 45 im Einsatzelement 42 kann, wie Fig. 6 zeigt, auch mit einer Einlage 55 bedeckt sein, die gelöste Quecksilberionen und/oder feinst dispergiertes elementares und/oder dampfförmiges Quecksilber bindet. Die Einlage 55 kann beispielsweise ein Metailgespinst, ein Metallgewebe, ein Metallschaum usw. aus einem Quecksilber legierenden oder in bezug auf Quecksilber unedlem Metall sein (Eisen. Zink, Zinn, Magnesium. Kupfer, usw.). Für die Entfernung von Quecksilberionen kann die Einlage 55 auch ionentauschende Eigenschaften aufweisen, und beispielsweise Thiol-, Thiohamstoff- od. dgl. Ionentauschmaterialien umfassen. Die Einlage 55 kann weiters auch Aktivkohle beinhalten.

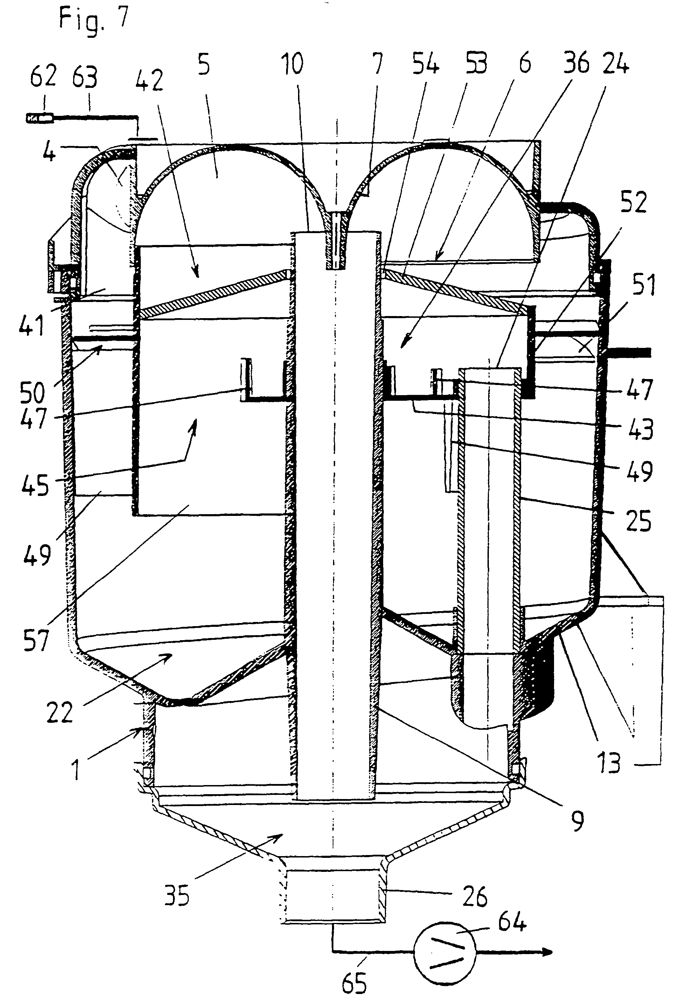

In der Ausführung nach Fig. 7 weist der Abscheider ein Gehäuse 1 auf, das wiederum zusätzlich einen Luftabscheideraum 5 oberhalb des Sedimentationsbehälters 13 aufweist, sodaß die das mittels eines Speichetsaugers 62 angesaugte Gemisch über eine Leitung 63 durch den Gemischeinlaß 4 in den Abscheider transportierende Saugluft vor der Feststoffabtrennung im selben Gerät abgetrennt wird. Der Luftabscheideraum 5 enthält eine schürzenartige Umlenkfläche 6 und eine kuppelartige, mittig tiefgezogene Umlenkfläche 7, wobei der Gemischeinlaß 4 ober- und außerhalb der schürzenartigen Umlenkfläche 6 vorgesehen ist. Die Saugluft wird zu einem Luftauslaß 10 gefördert, der an einem zentral im Sedimentationsbehälter 13 hochstehenden Rohr 9 vorgesehen ist, dessen oberes Ende höher als die Unterseite der schürzenartigen Umlenkfläche 6 liegt. Der mit dem Boden 43 des Einsatzelementes 42 verbundene Ringsteg 52 weist etwa über den halben Umfang beidseitig des Gemischeinlasses 4 eine in die schürzenartige Umlenkfläche 6 hochgezogene Leitwand 59 auf, um der Saugluft den direkten Weg zum Luftauslaß 10 zu versperren. Das von der Luft befreite Gemisch verläßt den Luftabscheideraum 5 durch einen peripheren sich rund um die schürzenartige Umlenkfläche 6 erstreckenden Gemischauslaß 41 und fällt in den darunterliegenden Einlaßraum 50, der durch schräg gestellte quer zur Einströmrichtung ansteigende Lamellen 51 in eine Anzahl von Durchtrittsschfitzen unterteilt ist. Die radialen Ränder aufeinanderfolgender Lamellen 51 liegen jeweils annähernd übereinander.

Das Einsatzelement 42 dieser Ausführung weist, wie Fig. 8 zeigt, eine dritte zentrale Öffnung 44 auf. die vom Rohr 9 durchsetzt ist, das unterhalb des Sedimentationsbehälters 13 in die Auslaßkammer 35 mündet, in der die abgetrennte Luft mit der gereinigten Flüssigkeit wieder vereint wird. An den der Auslaßkammer 35 zugeordneten Gehäuseauslaß 26 ist eine Leitung 65 zu einer als Wasserringpumpe ausgebildeten und daher auch die Zufuhr von Flüssigkeit erfordernden Saugpumpe 64 angeschlossen.

Um die Sedimentation der restlichen, vor allem feinen Feststoffe in der zweiten Sedimentationszone 36 nicht zu stören, ist diese gegen den Luftabscheideraum 5 mit einer etwa kegeligen Abdeckung 53 abgeschirmt, die eine zentrale vom Rohr 9 durchsetzte Öffnung 54 aufweist.

Der Sedimentationsbehälter 13 ist sowohl von der einen Unterteil des Gehäuses 1 bildenden Auslaßkammer 35 als auch von den dem Luftabscheideraum 5 umschließenden Oberteil des Gehäuses 1 abnehmbar und wird bei entsprechender Füllung mit sedimentierten Feststoffen gegen einen leeren Sedimentationsbehälter 13 ausgetauscht.

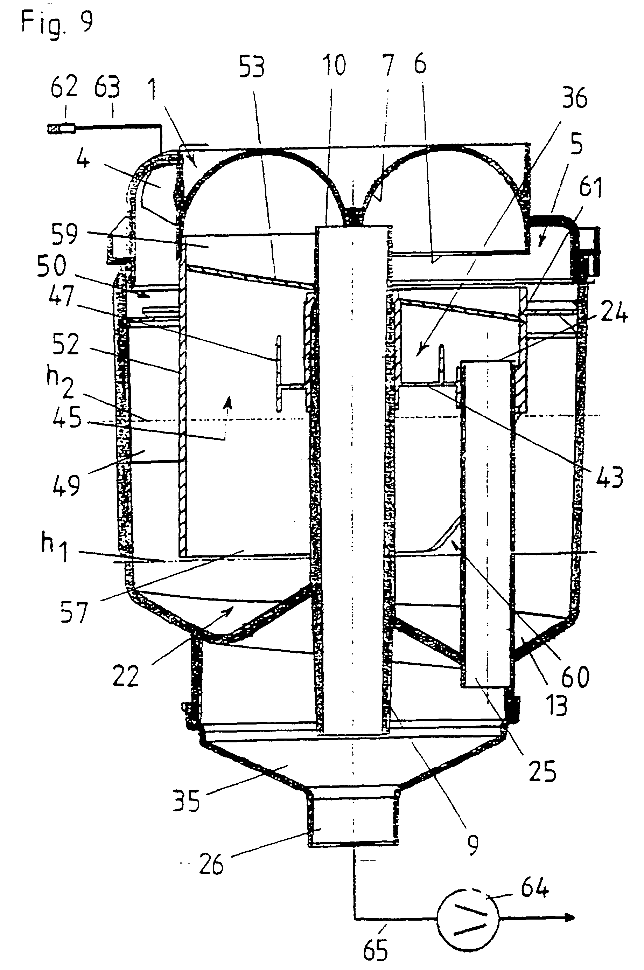

Fig. 9 zeigt eine weitere Ausführung eines Abscheiders mit einem Luftabscheideraum 5 oberhalb des Sedimentationsbehälters 13, der sich von der Ausführung nach Fig. 7 in einigen Details unterscheidet, die vor allem eine Verlängerung des Strömungsweges durch die erste Sedimentationszone 22 bewirken. So reicht die Tauchwand 57 im Vergleich zu Fig. 7 wesentlich weiter nach unten in den Sedimentationsbehälter 13, und der untere Rand erstreckt sich horizontal über einen Winkel von etwa 240° und läuft schräg ansteigend aus. Mit anderen Worten, die Tauchwand 57 weist an der dem Gemischeinlaß 4 gegenuberliegenden Seite einen etwa V-förmigen Ausschnitt 60 auf. Dadurch muß die Flüssigkeit nach dem Zuwachsen des direkten Strömungsweges, sobald das Sediment die Höhe h, erreicht hat, über einen peripheren Umweg von zumindest 120° strömen, um durch den V-formigen Ausschnitt 60 in das Innere der ersten Sedimentationszone 22 zu gelangen. Die maximale Sedimentationshöhe h₂ ist durch die Unterkante des Ringsteges 52 im Bereich des Ausschnittes 60 definiert.

Weiters ist die Abdeckung 53 der zweiten Sedimentationszone 36 eine schräge Scheibe. an deren tiefster Punkt eine Öffnung 61 im Ringsteg 52 den Rückfluß sich eventuell auf der Abdeckung 53 sammelnder, aus der umgelenkten Luft abgeschiedener Flüssigkeit in den Einlaßraum 50 ermöglicht.

## Patentansprüche

1. Abscheider zur Abtrennung von Feststoffen aus einem an einem zahnärztlichen Behandlungsplatz anfallenden Ffüssigkeits-Feststoffgemisch, mit einem einen Gemischeinlaß (4) und einen Flüssigkeitsauslaß (24) aufweisenden Gehäuse (1), in dem ein Feststoffabscheideraum (12) vorgesehen ist, der eine erste, untere Sedimentationszone (22), die mit dem Gemischeinlaß (4) strömungsverbunden ist, und zumindest eine oberhalb der ersten Sedimentationszone (22) angeordnete, zweite Sedimentationszone (36) aufweist, an deren Durchströmungsende der Flüssigkeitsauslaß (24) vorgesehen ist, **dadurch gekennzeichnet, daß** als Flüssigkeitsauslaß (24) ein freier Überlauf in ein Rohr (25) ausgebildet ist, das durch den Feststoffabscheideraum (12) nach unten geführt ist.

2. Abscheider nach Anspruch 1, **dadurch gekennzeichnet, daß** im Feststoffabscheideraum (12) zumindest zwei koaxial übereinander angeordnete Sedimentationsschalen (14) vorgesehen sind, die jeweils einen Sedimentationsbereich der zweiten Sedimentationszone (36) bilden.

3. Abscheider nach Anspruch 1, **dadurch gekennzeichnet, daß** im Gehäuse oberhalb des Feststoffabscheideraumes (12) ein mit Umlenkflächen (6, 7) versehener, nach unten in den Feststoffabscheideraum (12) offener Luftabscheideraum (5) vorgesehen ist, dem der Gemischeinlaß (4) und ein Luftauslaß (10) zugeordnet sind.

4. Abscheider nach Anspruch 1, **dadurch gekennzeichnet, daß** zur Trennung eines in einer zahnärztlichen Absauganlage anfallenden Saugluft-Feststoff-Flüssigkeitsgemisches mit einer Saugpumpe, einer das Gemisch aus dem Mund des Patienten absaugenden Saugdüse und einer zwischen der Saugdüse und der Saugpumpe verlaufenden Saugleitung, die durch den Abscheider in zwei Abschnitte unterteilt ist,
ein mit dem ersten Abschnitt der Saugleitung strömungsverbindbarer, mit Umlenkflächen (6, 7) versehener Luftabscheideraum (5), der einen Luftauslaß (10) und einen Auslaß (41) für das Feststoff-Flüssigkeitsgemisch aufweist,
ein mit dem Auslaß (41) für das Feststoff-Flüssigkeitsgemisch strömungsverbundener Sedimentationsbehälter (13) für die Feststoffe, der unterhalb des Luftabscheideraumes (5) angeordnet ist, in dem die erste untere (22) und die zweite obere Sedimentationszone (36) ausgebildet sind, und der oberhalb einer vorgegebenen Sedimentationshöhe den freien Überlauf aufweist,
und eine mit dem zweiten Abschnitt der Saugleitung strömungsverbindbare Auslaßkammer (35) vorgesehen sind, die unterhalb des Sedimentationsbehälters (13) angeordnet ist,
wobei der Luftauslaß (10) des Luftabscheideraumes (5) an einem Rohr vorgesehen ist, das durch den Sedimentationsbehälter (13) nach unten in die Auslaßkammer (35) geführt ist.

5. Abscheider nach Anspruch 1 oder 4, **dadurch gekennzeichnet, daß** die zweite, obere Sedimentationszone (36) zumindest zwei durch Überlaufstege (47) voneinander getrennte, jeweils einen Sedimentationsbereich bildende Kammern (48) aufweist, in deren letzter der als freier Überlauf in das Rohr (25) ausgebildete Flüssigkeitsauslaß (24) vorgesehen ist.

6. Abscheider nach einem der Ansprüche 1 bis 5, **dadurch gekennzeichnet, daß** die zweite Sedimentationszone (36) von einem Ringsteg (52) umgeben ist, außerhalb dessen ein peripherer Einlaßraum (50) in die erste Sedimentationszone (22) vorgesehen ist.

7. Abscheider nach Anspruch 6, **dadurch gekennzeichnet, daß** über einen Teil des Umfangs des Ringstegs (52) eine vom Ringsteg (52) unterschiedlich tief in die erste Sedimentationszone (22) ragende Tauchwand (57) vorgesehen ist.

8. Abscheider nach Anspruch 3 oder 4, **dadurch gekennzeichnet, daß** das Rohr (25) in den oberhalb angeordneten Luftabscheideraum (5) offen ist, und der Flüssigkeitsauslaß (24) auch den Luftauslaß (10) darstellt.

9. Abscheider nach Anspruch 4, **dadurch gekennzeichnet, daß** im Feststoffabscheideraum (12) zumindest zwei koaxial übereinander angeordnete Sedimentationsschalen (14) vorgesehen sind, die jeweils einen Sedimentationsbereich der ersten Sedimentationszone (22) bilden.

10. Abscheider nach Anspruch 2 oder 9, **dadurch gekennzeichnet, daß** die Sedimentationsschalen (14) mit nicht fluchtenden Bodenöffnungen und diese umgebenden, nach oben hochstehenden Hohlzylindem (16) versehen sind, die jeweils eine Sedimentationshöhe vorgeben.

11. Abscheider nach Anspruch 10, **dadurch gekennzeichnet, daß** jede Sedimentationsschale (14) eine äußere Begrenzungswand (20) aufweist, die die Höhe eines Freiraumes (18) oberhalb der Sedimentationshöhe definiert.

12. Abscheider nach Anspruch 10 und 11, **dadurch gekennzeichnet, daß** jede Bodenöffnung von einem nach unten in den Freiraum (18) ragenden Hohlkegelstumpf (17) umgeben ist.

13. Abscheider nach Anspruch 11, **dadurch gekennzeichnet, daß** die äußere Begrenzungswand (20) sich vom Boden (15) der Sedimentationsschale (14) nach unten erstreckt.

14. Abscheider nach einem der Ansprüche 1 bis 13, **dadurch gekennzeichnet, daß** in der zweiten Sedimentationszone eine Quecksilber und/oder Quecksilberionen bindende Einlage (19, 55) vorgesehen ist.

## Claims

1. A separator for separating solids from a mixture of liquid and solids arising at a dental treatment site, with a housing (1) which has a mixture inlet (4) and a liquid outlet (24), and in which there is a solids separator chamber (12) having a first lower sedimentation zone (22) fluidically communicating with said mixture inlet (4) and at least one second sedimentation zone (36) located above the first sedimentation zone (22) and provided with the liquid outlet (24) at the end of its flow path, **characterised in that** the liquid outlet (24) is defined by a free overflow into a tube, which extends downwardly through the solids separator chamber (12).

2. A separator according to claim 1, **characterised in that** at least two sedimentation dishes (14), each forming a sedimentation region of the second sedimentation zone (36), are arranged coaxially above one another in the solids separator chamber (12).

3. A separator according to claim 1, **characterised in that** in the housing above the solids separator chamber (12) an air separation chamber (5) is provided which is downwardly open into the solids separator chamber (12) and comprises the mixture inlet (4), deflection faces (6, 7), and an air outlet (10).

4. The separator according to claim 1, **characterised in that** for separating an air/solid/liquid mixture arising at a dental treatment site comprising a suction pump, a suction nozzle aspirating the mixture from a patient's mouth and a suction line which is arranged between the suction nozzle and the suction pump and divided into a first portion and a second portion by the separator, the separator comprises an air separation chamber (5) adapted to communicate fluidically with the first portion of the suction line, which has deflection faces (6, 7), an air outlet (10) and an outlet (41) for the solid/liquid mixture,
a sedimentation tank (13) for solids, disposed below said air separation chamber (5), which communicates fluidically with said outlet (41) for the solid/liquid mixture, in which the first lower (22) and the second upper sedimentation zone (36) are designed, and which comprises the free overflow above a predetermined sedimentation height, and
an outlet chamber (35) adapted to communicate fluidically with the second portion of the suction line and disposed below the sedimentation tank (13),
wherein the air outlet (10) of the air separation chamber (5) is provided via a tube extending downwardly through the sedimentation tank (13) into the outlet chamber (35).

5. The separator according to claim 1 or 4, **characterised in that** the second, upper sedimentation zone (36) is divided by overflow ribs (47) into at least two chambers (48) each forming a sedimentation region, wherein the last chamber comprises the liquid outlet (24) defined by a free overflow into the tube (25).

6. The separator according to one of claims 1 to 5, **characterised in that** the second sedimentation zone (36) is surrounded by an annular rib (52), outside thereof a peripheral inlet chamber (50) into the first sedimentation zone (22) is provided.

7. The separator according to claim 6, **characterised in that** an immersion wall (57) protruding variously deeply into the first sedimentation zone (22) from the annular rib (52) extends over a portion of a circumference of the annular rib (52).

8. The separator according to claim 3 or 4, **characterised in that** the tube (25) opens into the air separator chamber (5) disposed above, and the liquid outlet (24) also represents the air outlet (10).

9. The separator according to claim 4, **characterised in that** at least two sedimentation dishes (14) each forming a sedimentation region of the first sedimentation zone (22) are arranged coaxially above one another.

10. The separator according to claim 2 or 9, **characterized in that** the sedimentation dishes (14) are provided with non-aligned bottom openings and with upwardly projection hollow cylinders (16) surrounding these openings, which in each case define a sedimentation height.

11. The separator according to claim 10, **characterized in that** each sedimentation dish (14) has an outer boundary wall (20) which defines the height of a free space (18) above the sedimentation height.

12. The separator according to claim 10 and 11, **characterised in that** each bottom opening is surrounded by a hollow truncated cone (17) projecting downwardly into the free space (18).

13. The separator according to claim 11, **characterised in that** the outer boundary wall (20) extends downwardly from the bottom (15) of the sedimentation dish (14).

14. The separator according to one of claims 1 to 13, **characterised in that** a charge (19, 55) binding mercury and/or mercury ions is provided in the second sedimentation zone.

## Revendications

1. Séparateur pour séparer des solides d'avec un mélange de liquides et de solides produit à un poste de traitement dentaire, avec un boîtier (1) présentant un orifice d'admission du mélange (4) et un orifice de sortie de liquide (24), dans lequel il est prévu un espace de séparation de solides (12) qui présente une première zone de sédimentation inférieure (22) qui est en communication fluide avec l'orifice d'admission du mélange (4) et, disposée au-dessus de la première zone de sédimentation (22), au moins une deuxième zone de sédimentation (36) à l'extrémité de passage de laquelle l'orifice de sortie de liquide (24) est prévu, **caractérisé en ce que**, comme orifice de sortie de liquide (24), un déversoir de trop-plein est formé dans un tuyau (25) qui s'étend vers le bas dans l'espace de séparation de solides (12).

2. Séparateur selon la revendication 1, **caractérisé en ce qu'**il est prévu dans l'espace de séparation de solides (12) au moins deux cuvettes de sédimentation (14) disposées coaxialement l'une au-dessus de l'autre et formant chacune un secteur de sédimentation de la deuxième zone de sédimentation (36).

3. Séparateur selon la revendication 1, **caractérisé en ce qu'**il est prévu dans le boîtier, au-dessus de l'espace de séparation de solides (12), un espace de séparation d'air (5), muni de surfaces déflectrices (6, 7) et ouvert vers le bas dans l'espace de séparation de solides (12), auquel l'orifice d'admission du mélange (4) et un orifice de sortie d'air (10) sont affectés.

4. Séparateur selon la revendication 1, **caractérisé en ce que**, pour séparer un mélange d'air aspiré, de solides et de liquides produit dans une installation d'aspiration dentaire, qui a une pompe d'aspiration, une buse d'aspiration aspirant le mélange hors de la bouche du patient et une conduite d'aspiration s'étendant entre la buse d'aspiration et la pompe d'aspiration et partagée en deux sections par le séparateur,
il est prévu un espace de séparation d'air (5) pouvant être mis en communication fluide avec la première section de la conduite d'aspiration, muni de surfaces déflectrices (6, 7) et présentant un orifice de sortie d'air (10) et un orifice de sortie (41) pour le mélange de solides et de liquides,
un récipient de sédimentation (13), en communication fluide avec l'orifice de sortie (41) du mélange de solides et de liquides, pour les solides, disposé en dessous de la chambre de séparation d'air (5), dans lequel la première zone de sédimentation inférieure (22) et la deuxième zone de sédimentation supérieure (36) sont formées et qui présente le déversoir de trop-plein au-dessus d'une hauteur de sédimentation prédéterminée,
et une chambre de sortie (35), pouvant être mise en communication fluide avec la deuxième section de la conduite d'aspiration, qui est disposée en dessous du récipient de sédimentation (13),
dans lequel l'orifice de sortie d'air (10) de l'espace de séparation d'air (5) est prévu sur un tuyau qui s'étend vers le bas à travers le récipient de sédimentation (13) dans la chambre de sortie (35).

5. Séparateur selon la revendication 1 ou 4, **caractérisé en ce que** la deuxième zone de sédimentation supérieure (36) présente au moins deux chambres (48), séparées l'une de l'autre par des nervures de débordement (47) et formant chacune un secteur de sédimentation, dans la dernière desquelles est prévu l'orifice de sortie de liquide (24) réalisé sous la forme d'un déversoir de trop-plein dans le tuyau (25).

6. Séparateur selon l'une des revendications 1 à 5, **caractérisé en ce que** la deuxième zone de sédimentation (36) est entourée par une nervure annulaire (52) en dehors de laquelle un espace d'admission périphérique (50) est prévu dans la première zone de sédimentation (22).

7. Séparateur selon la revendication 6, **caractérisé en ce qu'**il est prévu sur une partie de la circonférence de la nervure annulaire (52) une paroi plongeuse (57) ayant une profondeur différente de celle de la nervure annulaire (52) et dépassant dans la première zone de sédimentation (22).

8. Séparateur selon la revendication 3 ou 4, **caractérisé en ce que** le tuyau (25) est ouvert dans l'espace de séparation d'air (5) disposé au-dessus et **en ce que** l'orifice de sortie de liquide (24) constitue également l'orifice de sortie d'air (10).

9. Séparateur selon la revendication 4, **caractérisé en ce qu'**il est prévu dans l'espace de séparation de solides (12) au moins deux cuvettes de sédimentation (14), disposées coaxialement l'une au-dessus de l'autre, qui forment chacune un secteur de sédimentation de la première zone de sédimentation (22).

10. Séparateur selon la revendication 2 ou 9, **caractérisé en ce que** les cuvettes de sédimentation (14) sont munies d'ouvertures du fond non alignées et de cylindres creux (16), entourant ces ouvertures, qui s'étendent vers le haut et déterminent chacun une hauteur de sédimentation.

11. Séparateur selon la revendication 10, **caractérisé en ce que** chaque cuvette de sédimentation (14) présente une paroi délimitante extérieure (20) qui définit la hauteur d'un espace libre (18) au-dessus de la hauteur de sédimentation.

12. Séparateur selon les revendications 10 et 11, **caractérisé en ce que** chaque ouverture du fond est entourée par un tronc de cône creux (17) dépassant vers le bas dans l'espace libre (18).

13. Séparateur selon la revendication 11, **caractérisé en ce que** la paroi délimitante extérieure (20) s'étend vers le bas depuis le fond (15) de la cuvette de sédimentation (14).

14. Séparateur selon l'une des revendications 1 à 13, **caractérisé en ce qu'**il est prévu dans la deuxième zone de sédimentation une garniture fixant le mercure et/ou les ions de mercure (19, 55).
